# FASCICULE DE BREVET EUROPEEN

(11) **EP 0 479 670 B1**
(45) Date de publication et mention de la délivrance du brevet: **08.09.1993**
(21) Numéro de dépôt: 91402619.0
(22) Date de dépôt: 01.10.1991
(51) Int. Cl.: C02F 1/52

(54) **Prétraitement des déchets et résidus contenant des ions sodium et potassium**
Vorbehandlung von Natrium- und Kaliumionen enthaltenden Abfällen und Resten
Pretreatment of sodium and potassium ions containing wastes and residues

(30) Priorité: 02.10.1990 FR 9012098
(43) Date de publication de la demande: 08.04.1992
(73) Titulaire: Pichat, Philippe, 75004 Paris (FR)
(72) Inventeur: Pichat, Philippe, 75004 Paris (FR)
(74) Mandataire: Cuer, André

(56) Documents cités:
- EP-A- 0 255 629
- CHEMICAL ABSTRACTS, vol. 101, no. 10, 3 Septembre 1984, Columbus, Ohio, US; abstract no. 75262Z, GARKUN V.K. ET AL.: 'Sodium fluorosilicate' page 145 ;colonne R ;
- CHEMICAL ABSTRACTS, vol. 92, no. 18, 5 Mai 1980, Columbus, Ohio, US; abstract no. 149396R, KALACH V.S. ET AL.: 'Potassium fluorosilicate' page 157 ;colonne R ;

## Description

La présente invention a trait au domaine du traitement chimique des résidus et déchets, industriels ou autres, contenant sous une forme ou sous une autre des ions alcalins, tout spécialement des ions sodium et ions potassium. Elle concerne un procédé permettant d'éliminer ou abaisser la teneur des déchets en de tels ions.

On sait que de nombreux déchets, notamment industriels, ainsi que des résidus de fabrication de divers produits chimiques, contiennent des ions alcalins tels que sodium et potassium en quantités non négligeables et parfois substantielles. C'est par exemple le cas des résidus de bains alcalins destinés à divers traitements industriels comme le décapage de métaux, tôles ou autres objets métalliques. C'est aussi le cas de beaucoup de déchets acides qu'il faut traiter par des carbonates ou hydroxides alcalino-terreux pour faire précipiter les sels des minéraux lourds (exemple : chrome, nickel, etc...) et qui contiennent des ions Na+ et/ou K+ du fait que ces traitements n'ont pas d'action sur les ions alcalins. On peut encore citer, à titre non limitatif, les procédés de traitement de surface utilisant des cyanures métalliques (Cu, Ni, Zn, Cd, Cr...) dissous dans un excès de cyanures alcalins et dans lesquels il convient de détruire, en fin de traitement, les cyanures ; ceci est effectué généralement par traitement avec un acide fort comme H2S04 selon le schéma simplifié : 2KCN + H2S04 --> 2HCN + K2S04

La réaction n'est cependant pas complète lorsque KCN est remplacé par un cyanure complexe et les résidus sont encore riches en ions K+ et Na+.

Or, la présence d'ions alcalins dans les déchets entraîne de sérieux inconvénients lors du traitement ultime de ces déchets en vue de leur élimination. Par exemple, la présence d'alcalins conduit à la détérioration des réfractaires silicoalumineux des fours d'incinération et à la formation d'anneaux de sels alcalins sur les parois des fours. De même, le traitement des déchets contenant plus de 15 g/l d'ions alcalins par la technique dite Evapo-Incinération (marque déposée), provoque des encrassages rapides de l'appareillage de traitement. On a donc intérêt à assurer un prétraitement des déchets et résidus avant de les envoyer dans une installation d'évapo-incinération.

On sait, par ailleurs, que la fabrication d'acide phosphorique selon la voie humide, par traitement de phosphate de calcium ou minerai phosphoré à l'aide d'acide sulfurique, s'accompagne de la production d'acide fluorosilicique (H2 Si F6) ou produit en contenant, du fait de la présence de fluorure de calcium et de silice dans le minerai utilisé comme matière première. Une partie de cet acide fluorosilicique est récupérée, pour utilisation en industrie chimique, lorsque la teneur est très faible (généralement inférieure à 50 parties par million ppm) en acide phosphorique. Toutefois, une proportion non négligeable de cet acide, contenant plus de 50 ppm et souvent de 500 à 600 ppm de H3P04, est évacuée dans l'environnement après neutralisation. Ce type de déchet sera appelé ci-après DFAP, abréviation de "Déchet de Fabrication d'Acide Phosphorique".

Il a maintenant été trouvé, de façon surprenante, que l'on pouvait avantageusement utiliser ce résidu DFAP pour éliminer ou séparer des ions alcalins, de types Na+ et/ou K+, dans les déchets industriels ou autres, tels que énumérés ci-avant, avant leur traitement par incinération ou autre méthode, par exemple selon les procédés physico-chimiques de neutralisation.

En pratique, il suffit de mélanger sous agitation, à température ordinaire, ou éventuellement sous léger chauffage, les déchets alcalins à traiter avec le résidu DFAP. Les quantités de produits à mettre en oeuvre sont fonction de chaque type de déchet mais on doit s'arranger, par des analyses et calculs préliminaires, pour que l'on ait au maximum l'équivalent d'1 mole de SiF6H2 pour l'équivalent de 2 moles en ions alcalins (Na+, K+ ou mélange des deux). Les sels qui précipitent dans le mélange sont séparés du déchet traité par des opérations classiques de décantation, centrifugation et/ou filtration puis envoyés en décharge ou solidifiés par des procédés bien connus.

Le procédé selon l'invention peut être utilisé pour le traitement de tous types de déchets alcalins, sous forme liquide ou solide, qu'ils soient neutres, basiques ou acides.

Il a en outre été trouvé que, dans certain cas, on pouvait remplacer l'utilisation d'acides forts par du DFAP comme par exemple pour acidifier le milieu cyanuré du traitement de surface auquel il est fait allusion dans la description ci-avant. On fait précipiter dans ce cas le fluorosilicate de sodium ou potassium et le déchet, débarrassé des cyanures, peut être utilisé pour neutraliser le sodium ou potassium d'un autre déchet puisqu'il contient un excès de DFAP.

Par exemple on est parti d'un déchet contenant 96,1 g/l de Na, 1 g/l de K. Il renfermait en outre 130 mg/l de phénol et une quantité de C.O.T. (Carbone Oxydable Total) de 11 000 mg/l. On a ajouté, à 100 g de ce déchet, 80 g de DFAP en opérant à température ordinaire, sous agitation. Après précipitation des fluorosilicates, il restait seulement 6,53 g/l de Na et des traces de potassium. En utilisant 99 g de DFAP, la solution obtenue ne contenait plus que 1,2 g/l d'ions Na+. On a constaté, à cette occasion, que le traitement selon l'invention permettait dans ce cas d'abaisser considérablement la teneur en phénols, qui passait à 42 mg/l seulement ainsi que la DCO (Demande Chimique en Oxygène) qui passait de 8.10⁵ à 1,5.10⁵.

## Revendications

1. Procédé pour abaisser la teneur ou éliminer les ions sodium et potassium dans les déchets et résidus, industriels ou autres, contenant de tels ions, caractérisé en ce que l'on traite les déchets contenant ces ions par le résidu, riche en acide fluorosilicique et considéré lui-même comme un déchet polluant, issu de la fabrication d'acide phosphorique par action d'acide sulfurique sur un minerai calcique à base de phosphate de calcium.

2. Procédé selon la revendication 1, caractérisé en ce que le traitement est effectué dans des conditions telles que l'on ait au maximum l'équivalent d'1 mole de SiF6H2 (acide fluorosilicique) pour l'équivalent de 2 moles en ions alcalins (Na+, K+ ou le mélange des deux).

3. Procédé selon l'une quelconque des revendications 1 ou 2, caractérisé en ce que le traitement consiste en un simple mélange des produits sous agitation, à température ordinaire ou sous léger chauffage.

4. Procédé selon l'une quelconque des revendications 1 à 3 caractérisé en ce que le sel alcalin qui précipite dans le mélange après traitement est séparé du déchet par des opérations classiques de décantation, centrifugation, filtration puis envoyé en décharge ou solidifié.

5. Application du procédé selon l'une quelconque des revendications 1 à 4 au prétraitement avant incinération ou processus physico-chimique, de déchets riches en ions Na+ et K+, qui peuvent être neutres, acides ou basiques, sous forme liquide ou solide.

## Patentansprüche

1. Verfahren zur Senkung des Gehalts oder Beseitigung der Natrium- und Kaliumionen in gewerblichen oder anderen Abfällen und Rückständen, die solche Ionen enthalten, dadurch **gekennzeichnet,** daß diese Ionen enthaltenden Abfälle mit dem fluorkieselsäurereichen und selbst als verschmutzender Abfall angesehenen Rückstand behandelt werden, wobei dieser von der Phosphorsäureherstellung durch Einwirkung von Schwefelsäure auf ein calciumhaltiges Erz mit Calciumphosphatbasis hervorgegangen ist.

2. Verfahren nach Anspruch 1, dadurch **gekennzeichnet,** daß die Behandlung unter solchen Bedingungen ausgeführt wird, daß man höchstens das Äquivalent von 1 Mol SiF6H2 (Fluorkieselsäure) für das Äquivalent von 2 Mol Alkaliionen (Na+, K+ oder die Mischung beider) hat.

3. Verfahren nach einem beliebigen der Ansprüche 1 oder 2, dadurch **gekennzeichnet,** daß die Behandlung aus einem einfachen Mischen der Produkte unter Rühren bei Normaltemperatur oder unter leichter Erwärmung besteht.

4. Verfahren nach einem beliebigen der Ansprüche 1 bis 3, dadurch **gekennzeichnet,** daß das Alkalisalz, das nach Behandlung in der Mischung ausfällt, durch herkömmliche Dekantier-, Zentrifugier-, Filtriervorgänge vom Abfall getrennt und dann zum Austrag überführt oder verfestigt wird.

5. Anwendung des Verfahrens nach einem beliebigen der Ansprüche 1 bis 4 zur Vorbehandlung vor Verbrennung oder einem physikalisch-chemischen Prozess von Abfällen in flüssiger oder fester Form, die reich an (Na+)- und (K+)- Ionen sind, die neutral, sauer oder basisch sein können.

## Claims

1. Method for reducing or eliminating the sodium and potassium ion content in waste and residues, industrial or otherwise, containing such ions, characterised in that the waste containing these ions is treated with the residue from the manufacture of phosphoric acid by the action of sulphuric acid on a chalky ore based on calcium phosphate, the said residue containing a high proportion of fluorosilicic acid and itself considered to be polluting waste.

2. Method according to Claim 1, characterised in that the treatment is carried out under conditions such that there is at most the equivalent of 1 mole of SiF₆H₂ (fluorosilicic acid) for the equivalent of 2 moles of alkaline ions (Na+, K+ or a mixture of the two).

3. Method according to either one of Claims 1 or 2, characterised in that the treatment consists of a simple mixing of the products under agitation, at normal temperature or with slight heating.

4. Method according to any one of Claims 1 to 3, characterised in that the alkaline salt which precipitates in the mixture after treatment is separated from the waste by conventional operations of decantation, centrifugation and filtration and then discharged or solidified.

5. Application of the method according to any one of Claims 1 to 4 to the pretreatment, before incineration or a physico-chemical process, of wastes with a high content of Na+ and K+ ions, which may be neutral, acid or basic, in liquid or solid form.
